# EUROPEAN PATENT SPECIFICATION

(11) **EP 4 033 896 B1**
(45) Date of publication and mention of the grant of the patent: **22.04.2026**
(21) Application number: 20751246.8
(22) Date of filing: 27.07.2020
(51) Int. Cl.: A01M 23/12, A01M 23/24, A01M 27/00, A01M 23/30

(54) **RODENT TRAPS**
NAGERFALLE
PIÈGE À RONGEURS

(30) Priority: 26.09.2019 GB 201913904
(43) Date of publication of application: 03.08.2022
(73) Proprietor: Rentokil Initial 1927 PLC, Camberley, Surrey GU17 9AB (GB)
(72) Inventor: HANSEN, Neils, Camberley GU15 3LN (GB); WINGETT, Gary, Southampton SO40 3QD (GB); MCCAIG, John, West Sussex RH20 2JA (GB); BEST, Michael, Southampton SO40 8WQ (GB)
(74) Representative: Abel & Imray LLP
(86) International application number: PCT/GB2020/051799
(87) International publication number: WO 2021/058934

(56) References cited:
- WO-A1-2013/107997
- WO-A1-2013/173866
- WO-A1-2017/205768
- WO-A1-2019/048347
- US-A- 1 034 978
- US-A- 4 250 655
- US-A- 4 653 221
- US-A- 5 154 017
- US-A- 5 953 853
- US-A1- 2009 223 112
- US-A1- 2014 059 917
- US-A1- 2018 125 056

## Description

### Field of the Invention

The present invention concerns rodent traps. More particularly, but not exclusively, the invention concerns rodent traps comprising a kill mechanism arranged to kill a rodent, and a storage area into which a rodent corpse passes after the rodent has been killed by the kill mechanism.

### Background of the Invention

It is common for rodent traps to be checked only periodically, for example monthly. A downside of this is that rodents that have been caught can remain in the trap for a long period before being removed. This reduces the rate at which rodents can be caught by the trap, as until a rodent corpse has been removed and the trap reset, no further rodents will be caught. In addition, in the period before the rodent corpse is removed it can decompose, causing hygiene and odour issues.

The present invention seeks to provide a rodent trap that solves or mitigates some or all of the above-mentioned problems. Alternatively and/or additionally, the present invention seeks to provide an improved rodent trap.

US 2009/0223112 A1 (Animal Deterrent Systems Ltd) published 10 September 2009 discloses a vermin trap comprising a movable path between the entrance and the bait, and sensor means adjacent the movable path for detecting vermin presence on the path. When a vermin detection signal is sent to control means, the control means causes a movable clamping member to trap the vermin for electrocution. Also disclosed are methods of the path to rotate and/or pivot, thereby dislodging the electrocuted vermin and into a containment region. Methods for electrocuting vermin are also disclosed.

A further rodent trap wherein the corps of the vermin is dislodged into a collection area is known from WO 2013/107997 A1.

### Summary of the Invention

In accordance with the invention there is provided a rodent trap comprising:
a trigger arranged to be triggered by a rodent;
a kill mechanism arranged to kill a rodent in response to the trigger being triggered by the rodent, wherein the kill mechanism comprises an impactor to strike the rodent to kill it;
a trapdoor positioned to a side of the kill mechanism, having a closed position and an open position;
a storage area positioned on the other side of the trapdoor to the kill mechanism;
wherein the rodent trap is arranged such that when a rodent is killed by the kill mechanism, the rodent corpse passes through the trapdoor into the storage area;
characterised in that the kill mechanism comprises a shroud, and is arranged to kill the rodent when the head of the rodent is within the space formed by the shroud, the shroud being configured and dimensioned such that the head of the rodent is maintained in position and orientation within the shroud while the rodent is killed by the impactor such that the rodent is killed by neck shear, and wherein the kill mechanism if further arranged to push the rodent corpse through the trapdoor into a storage area following being killed using the impactor.

By having a trapdoor to the side of the kill mechanism through which the rodent corpse passes, once a rodent has been killed the rodent corpse can remain in the storage area, allowing the kill mechanism to be used on further rodents without the rodent corpse first needing to be removed by an operator.

The shroud is a shaped part, configured and dimensioned so that the head of the rodent is necessarily maintained in a particular position and orientation when within the space formed by the shroud. The use of a shroud ensures the position of the rodent within the rodent trap when the kill mechanism is triggered, to aid the killing of the rodent by the kill mechanism.

Preferably, the trapdoor is biased to return to the closed position. In this way, the rodent corpse can travel through the trapdoor into the storage area following the rodent being killed by the kill mechanism, and the trapdoor then return to the closed position. The trapdoor may be biased by a spring, for example. Advantageously, the trapdoor is biased only by gravity. This allows the use of springs in the rodent trap to be avoided, so that it does not fall with "spring trap" legislation.

Advantageously, the trapdoor comprises a latch mechanism arranged to keep the trapdoor closed before a rodent has been killed by the kill mechanism, and to release the trapdoor after a rodent has been killed by the kill mechanism.

Preferably, the trigger comprises bait to attract a rodent. Alternatively, the trigger may comprise a lure.

The rodent trap may further comprises a reset mechanism arranged to reset the kill mechanism after a rodent has been killed by the kill mechanism. Alternatively, the kill mechanism may be self-resetting.

The kill mechanism may comprise a compressed-air powered bolt. The compressed-air powered bolt may be self-resetting.

In an alternative embodiment, which is not part of the present invention, the kill mechanism may comprise: a capture arm, wherein the capture arm is biased from an armed position to a triggered position; a latch arranged to hold the capture arm in the armed position; wherein the trigger is arranged, when triggered by a rodent, to release the latch so that the capture arm moves from the armed position to the triggered position to kill the rodent by exerting a force on the rodent. The kill mechanism may be a standard "snap" trap, and may be replaceable. Preferably, the reset mechanism is arranged to return the capture arm to the armed position after a rodent has been killed by the capture arm. This releases the rodent corpse from the capture arm so that it can fall through trapdoor, for example. Advantageously, the trapdoor comprises a latch mechanism arranged to keep the trapdoor closed, and wherein the reset mechanism is arranged to release the latch mechanism as the capture arm is returned to the armed position. In this way, the reset mechanism performs both tasks of resetting the kill mechanism and allowing the trapdoor to open. Preferably, the reset mechanism is arranged to engage the latch mechanism after the capture arm has returned to the armed position. Advantageously, the capture arm moves in a plane parallel to the trapdoor mechanism. The kill mechanism may be a snap trap that is mounted on its side. This prevents the trigger of the kill mechanism from being beneath the rodent corpse, which could prevent the rodent corpse falling through the trapdoor.

Advantageously, the kill mechanism comprises a trigger that is triggered by being moved by the head of the rodent. Particularly advantageously, the trigger is configured and dimensioned to only be triggered by particular types of rodent. This allows the kill mechanism to be triggered by rats but not by mice, for example. Advantageously, both the shroud and trigger are configured and dimensioned to only be triggered by particular types of rodent.

The storage area may comprise a removable bag into which the rodent corpse passes.

The storage area may comprise a preservative. This helps prevent the rodent corpse decomposing while it is in the storage area, mitigating hygiene and odour issues. The preservative may comprise formaldehyde. The preservative may be a reservoir of liquid within the storage area.

The storage area may comprise a fragrance. Preferably, the storage area comprises an odour absorbent or neutraliser, such as granular bamboo charcoal material. The use of an odour absorbent or neutraliser mitigates the effect of odours from rodent corpses in the storage area, such as volatile organic compounds, that may deter a rodent. In addition, unlike a fragrance, an odour absorbent or neutraliser will not mask attractive odours of a bait or lure.

The storage area may comprise a liquid absorbent. The liquid absorbent may be a gelling agent, bentonite clay (commonly used as cat litter), silica gel, fumed silica, or any other suitable liquid absorbent. Preferably, the liquid absorbent is a superabsorbent polymer.

The storage area may comprise a biocide. The biocide may comprise chlorhexidine, quaternary ammonium cations, or any other suitable biocide.

Advantageously, the storage area comprises a dispensing mechanism arranged to dispense a substance into the storage area. The dispensing mechanism may be arranged to dispense the substance when the kill mechanism is activated. Alternatively, the dispensing mechanism may be arranged to dispense the substance when the trapdoor is opened and/or closed. The dispensed substance may be preservative, fragrance, biocide, or any other substance advantageously dispensed into the storage area. In this way, a supply of the substance can be maintained in the dispensing mechanism, and only dispensed when required, preserving the supply of the substance.

It will of course be appreciated that features described in relation to one aspect of the present invention may be incorporated into other aspects of the present invention.

### Description of the Drawings

Embodiments of the present invention will now be described by way of example only with reference to the accompanying schematic drawings 6 to 10d. The figures 1a - 5b only show examples of a rodent trap which is not part of the present invention.
Figure 1a shows a rodent trap in accordance with a first example;
Figure 1b shows the trap tray of the rodent trap of Figure 1a;
Figure 2 is an exploded view of the rodent trap of Figure 1a;
Figures 3a to 3f show the operation of the trap tray when a rodent is captured;
Figure 4 is an exploded view of a rodent trap in accordance with a second example;
Figures 5a and 5b shows the trap tray of the rodent trap of Figure 4;
Figure 6 shows a rodent trap in accordance with an embodiment of the invention;
Figure 7 shows a perspective view of the rodent trap of Figure 6;
Figure 8 shows the kill mechanism of the rodent trap of Figure 6;
Figure 9a to 9c show the shroud of the rodent trap of Figure 6; and
Figures 10a to 10d show the operation of the rodent trap of Figure 6 when a rodent is captured.

### Detailed Description

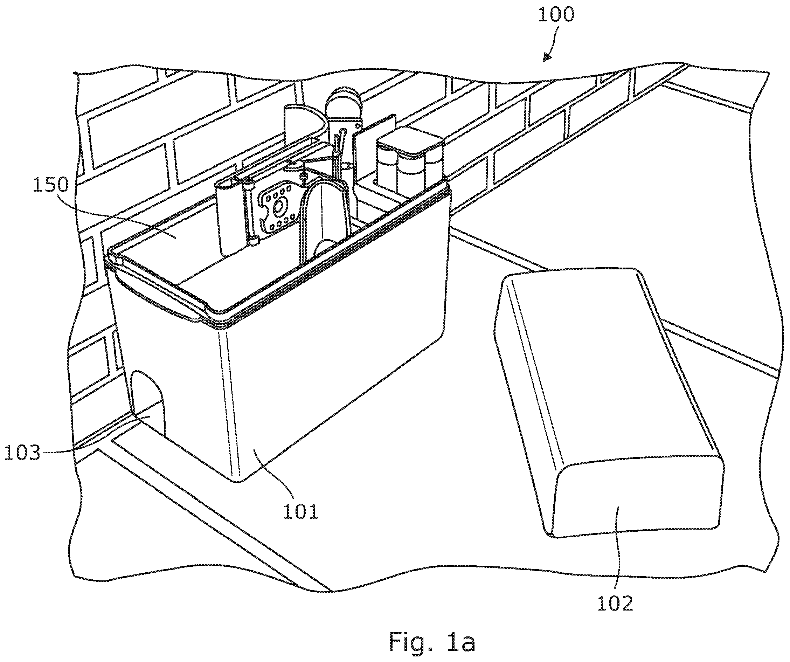

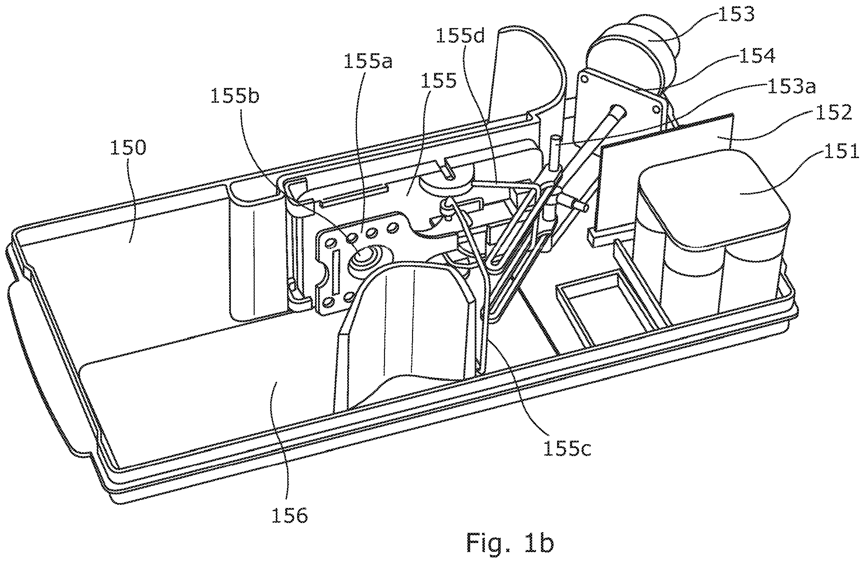

A first example rodent trap, which is not encompassed by the claims but is considered as useful for understanding the invention, is now described with reference to Figures 1 to 3f.

As shown in Figure 1a, the rodent trap 100 comprises a body 101 and lid 102, with the lid 102 shown removed in Figure 1. In the top part of the body 101 is a trap tray 150, as described in more detail below. The body 101 comprises an opening 103, positioned at the bottom of the body 101 on one side, so that when as in Figure 1 the rodent trap 100 is placed next to a wall or the like, the opening is at ground level adjacent to the wall.

The trap tray 150 is shown in more detail in Figure 1b. The trap tray 150 comprises a battery pack 151 and control circuit 152. The control circuit 152 controls a motor 153 that is mounted on the trap tray 150 by a mounting bracket 154. The floor of the trap tray 150 has an opening 156 in which is positioned a trapdoor 157 (not shown in Figure 1b), as described below.

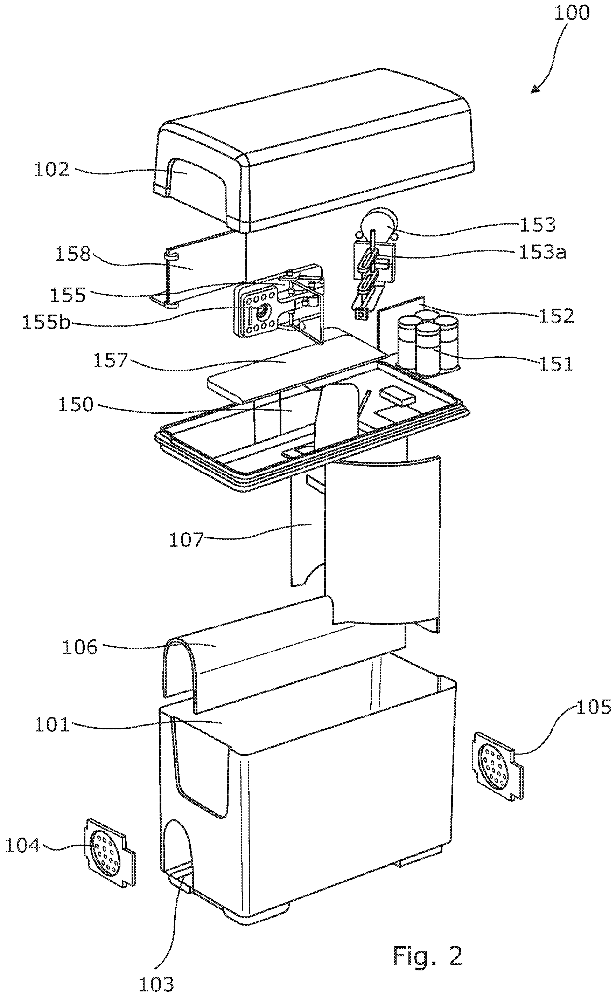

On a side of the trap tray 150, above the opening 156, is a "snap" trap 155 comprising a trigger 155a, baited pot 155b, capture arm 155c and reset arm 155d. The snap trap 155 is mounted on the trap tray 150 by a mount 158, as shown in particular in Figure 2.

The capture arm 155c of the snap trap 155 is biased by a spring, so that when the trigger 155a is pressed by a rodent attempting to reach bait in the baited pot 155b, the capture arm 155c is freed from a latched position and moves to a triggered position, killing the rodent. The snap trap 155 is positioned so that the trigger is pressed by the rodent towards the side of the trap tray 150, and the capture arm moves in a plan parallel to the bottom of the trap tray 150 when it is triggered. (In other words, the snap trap 155 is mounted on its side, at right angles to the usual orientation of a snap trap when positioned on the ground.)

The motor 153 is connected to a reset arm 155d of the snap trap 155 by a re-arming mechanism 153a, so that the motor 153 can reset the snap trap 155, i.e. return the capture arm 155c to the latched position, after it has been triggered. The re-arming mechanism comprises two arms that loop around the reset arm 155d of the snap trap 155, so that when retracted the two arms pull the reset arm 155d back into position, as described in more detail below.

Figure 2 is an exploded diagram of the rodent trap 100. As can be seen, a "nibble screen" 104 is provided to cover the opening 103. This is a screen that can be chewed through by a rat, for which the rodent trap 100 of the present example is designed to capture, but not by other rodents such as mice. A further nibble screen 105 is provided over a further opening (not shown in Figure 2) in the body 101, opposite the opening 103. Thus, the nibble screens 104 and 105 help ensure the rodent trap 100 catches only the desired type of rodent.

A cover 106 is positioned between the opening 103 and the opposite opening, to create a tunnel between the openings though which a rodent can travel. The cover 106 has an opening (not shown) into a stairwell 107, which provides a route by which a rodent can travel to the upper surface of the trap tray 150.

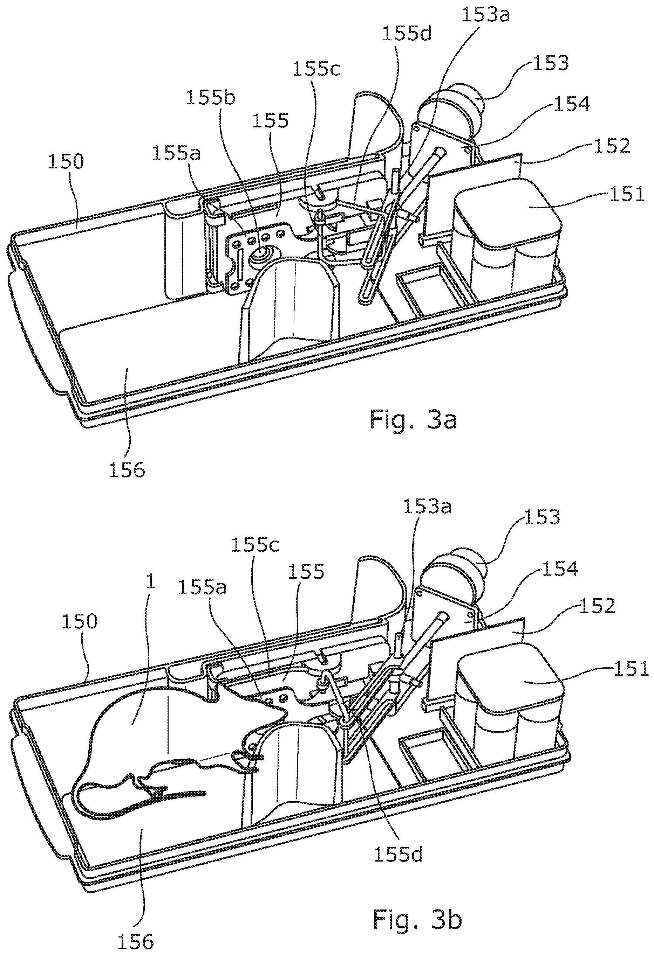

The operation of the rodent trap 100 is now described with reference to Figures 3a to 3f, which show the trap tray 150 in different states.

As shown in Figure 3a, initially the snap trap 155 is in the latched position. While not shown in Figure 3a, the trapdoor 157 covers the hole 156, providing a floor to the trap tray 150. The trapdoor 157 is biased by a spring 157a to cover the hole 156. In addition, a latch (not shown) holds the trapdoor 157 in place.

In Figure 3b, a rat 1 has entered the upper surface of the trap tray 150 via the body 101 of the rodent trap 100, by entering the opening 103 or the opposite opening, and travelling through the tunnel created by the cover 106 and the stairwell 107. As the trapdoor 157 is latched in place, the rodent 1 has been able to stand upon the trapdoor 157 without the trapdoor 157 moving. The rodent 1 has pressed the trigger 155a of the snap trap 155, causing the capture arm 155c to move to the triggered position, killing the rodent 1.

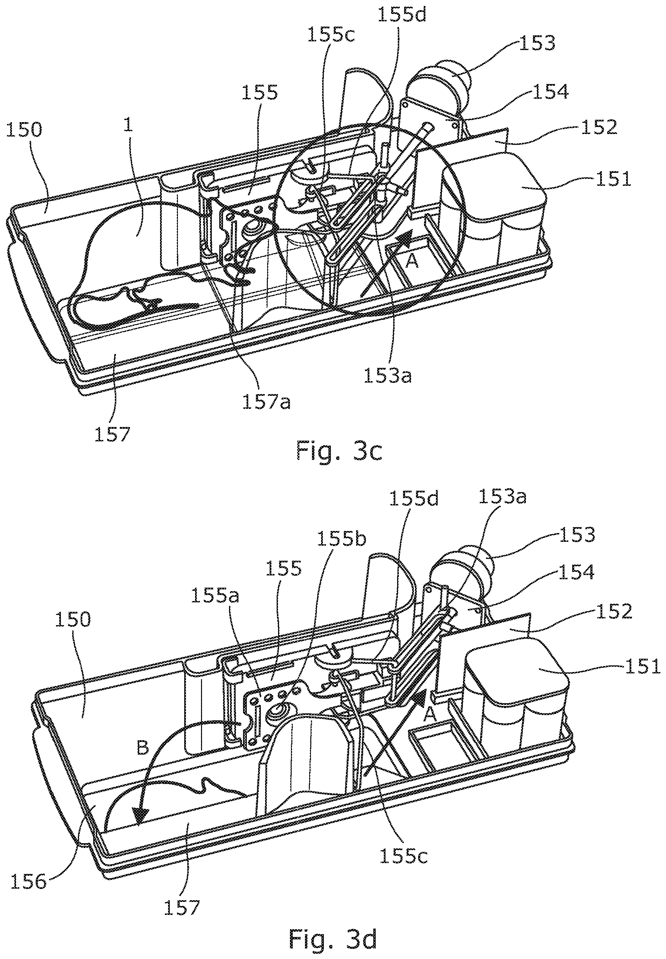

As shown in Figures 3c and 3d, after the snap trap 155 has been triggered, the motor 153 uses the reset mechanism 153a to pull the reset arm 155d of the snap trap 155 in the direction shown by the arrow A, so returning the capture arm 155c to the latched position. The latch holding the trapdoor 157 closed is also released. As the rodent 1 is no longer held in the snap trap 155 by the capture arm 155c (and the snap trap 155 is mounted on the side of the trap tray 150), and the trapdoor 157 is no longer held closed by the latch, the weight of the rodent 1 causes the trapdoor 157 to open, allowing the rodent 1 to fall through the opening 156 as shown by the arrow B.

As mentioned above, the motor 153 is controlled by the control circuit 152, which can identify that the snap trap 155 has been triggered by means of a sensor such as a motion sensor, or any other suitable sensing means.

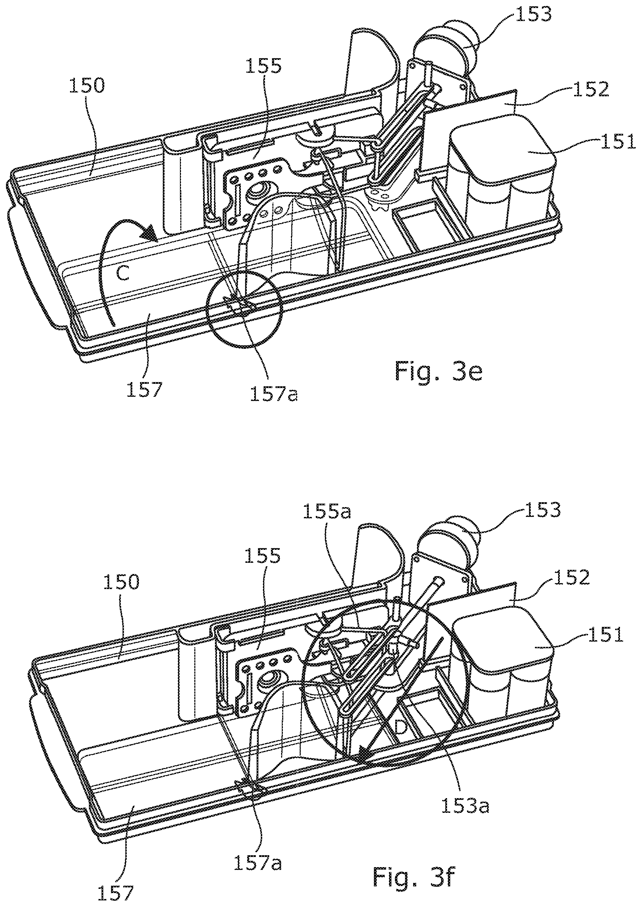

As shown in Figure 3e, after the rodent 1 has passed through the opening 156, the spring 157a biases the trapdoor 157 to return to the closed position, as shown by the arrow C. Following that, as shown in Figure 3f the motor 153 moves the reset mechanism 153a back to its usual position, as shown by the arrow D, so that the reset arm 155d is able to move when the snap trap 155 is triggered, and the capture arm 155c is not prevented from moving to the triggered position. Finally, the trapdoor 157 is latched again so that it is held it closed.

In this way, the rodent trap 100 is able to kill multiple rodents, as the snap trap 155 can be reset, and the rodents once killed falls into the body 101 of the rodent trap 100, away from the trap tray 150 and the snap trap 155. The rodent corpses can fall into a plastic bag in the body 101, for example, to enable easy disposal. In other embodiments of the invention, the rodent corpses can fall into a reservoir of liquid with preservative properties in the body 101 such as formaldehyde, to prevent the rodent corpses from decomposing, preventing hygiene and odour issues. It will be appreciated that various other possibilities could be envisioned by the skilled person.

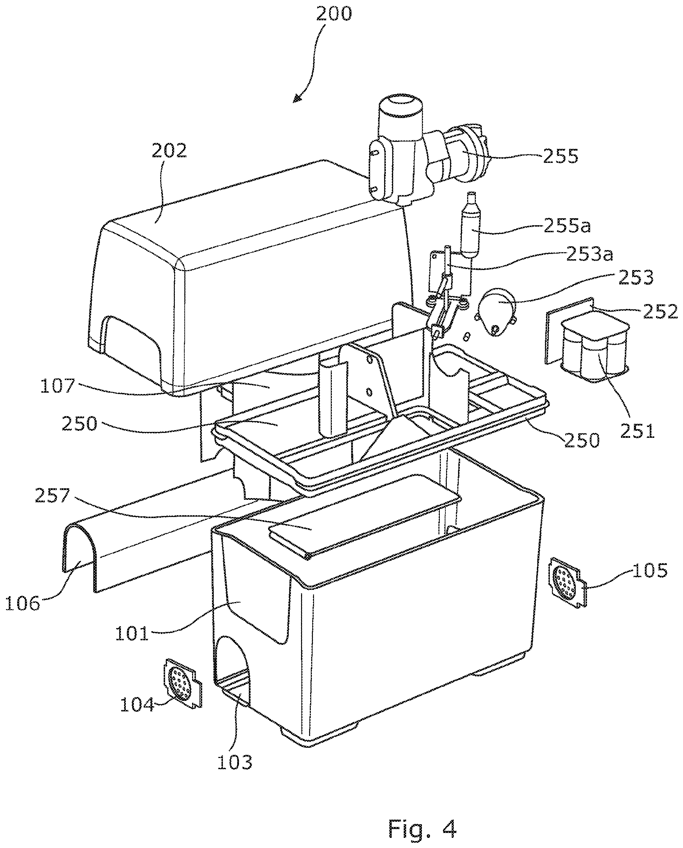

A second example rodent trap, which is not encompassed by the claims but is considered as useful for understanding the invention, is now described, with reference to Figures 4 to 5b.

As shown in Figure 4, the rodent trap 200 again comprises a body 101 with opening 103 and opposite opening (not shown), covered by nibble screens 104 and 105. The body 101 may again comprise a plastic bag, reservoir of liquid or the like for receiving rodent corpses. The body 101 again contains a cover 106 and stairwell 107 providing a route by which a rodent can travel to the upper surface of a trap tray 250. The rodent trap 200 also again comprises a lid 202, though it is a larger lid than the lid 102 of the first example, as the components on the trap tray 250 of the present example require more space.

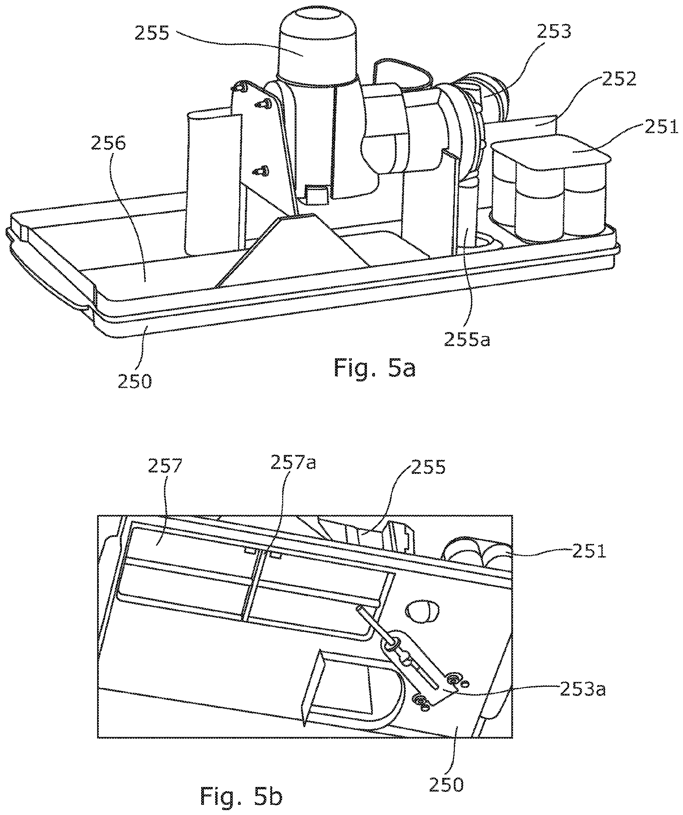

As also shown in Figures 5a and 5b, similarly to the first example the trap tray 250 has an opening 256 covered by a trapdoor 257 biased by a spring 257a, and holds a trap to kill a rodent. However, in the second example the trap is a bolt trap 255, which defined a cylindrical space open at the bottom, and contains a compressed-air powered bolt powered by a CO₂ canister 255a. When a rodent enters into the cylindrical space within the bolt trap 255 the powered bolt is triggered, killing the rodent.

Again similarly to the first example, the bolt trap 255 is controlled by a control circuit 252, which is powered by a battery pack 251. The control circuit 252 also controls a motor 253, which controls a latch 253a for the trapdoor 257.

Thus, in the second example, when a rodent is killed by the bolt trap 255, the motor 253 releases the latch 253a. The weight of the rodent then opens the trapdoor 257, allowing it to fall through the opening 256. (The bolt trap 255 is self-resetting, and so it does not need to be reset and does not hold the rodent corpse in place until that has occurred, unlike a snap trap.) After the rodent has passed through the opening 256 the trapdoor 257 is moved to the closed position again by the spring 257s, and the motor 253 then puts the latch 253a back in place to hold the trapdoor 257 shut.

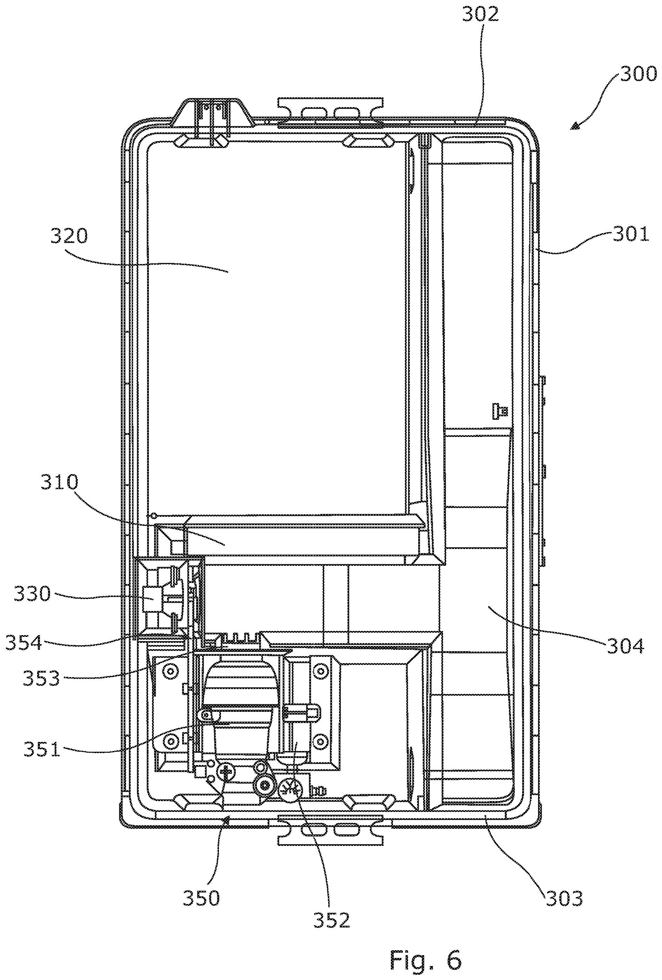

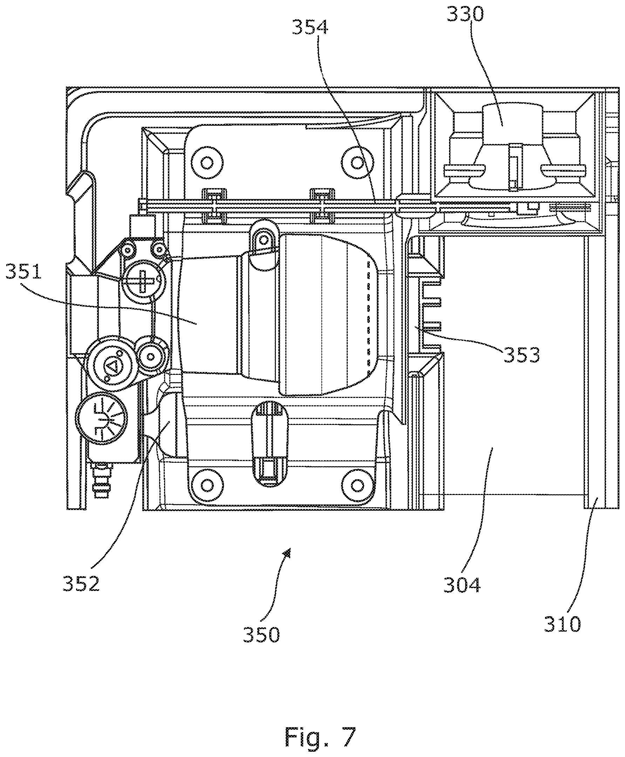

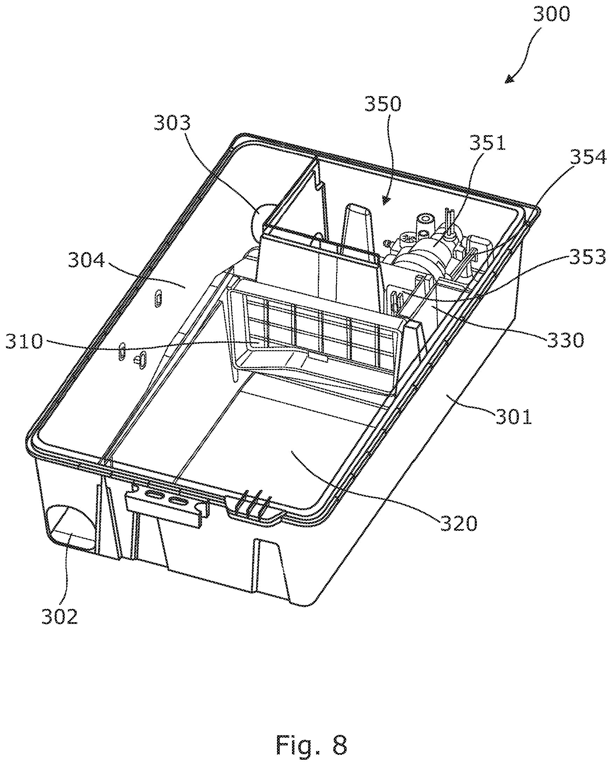

A rodent trap in accordance with an embodiment of the invention is now described, with reference to Figures 6 to 10d.

As shown in Figures 6 to 8, the rodent trap 300 comprises a body 301 with openings 302 and 303 on opposite side of the body 301, through which a rodent can enter an exit. The rodent trap 300 will in use have a cover to the body 301, though this is not shown in the figures for clarity. Inside the body is a passage 304 running between the openings 302 and 303. The presence of the opposite openings 302 and 303 encourages a rodent to enter the rodent trap 300, as when entering the rodent trap 300 through one opening it is able to see the opposite opening as an observable escape route, encouraging it to feel safer entering the device. In addition, the surface of the passage has a rough texture that provides traction for the rodent, again improving its feelings of safety.

The passage 304 also has a fork leading up to a kill mechanism 350, which is described in detail below. The passage 304 has a gentle slope (15-35°, for example) from the opening 303 down to the opening 302, with the fork leading to the kill mechanism 350 consequently having the same slope, from its side adjacent to the kill mechanism 350 down to its opposite side.

The body 301 also comprises a trapdoor 310. The trapdoor 310 is hinged at its top so that, when pushed open in the direction away from the kill mechanism 350, it is biased by gravity to close again. The periphery of the door comprises a flexible seal, for example a closed-cell sponge foam elastomeric seal. In addition, the periphery of the trapdoor 310, and the frame in which the trapdoor 310 is mounted, comprise corresponding magnets that helps ensure the trapdoor 310 remains tightly closed. On the opposite side of the trapdoor 310 to the kill mechanism 350 is a storage area 320 for receiving rodent corpses, as described in detail below. The storage area 320 may comprise a removable bag into which the rodent corpses are received, to enable easy disposal.

In alternative embodiments of the invention, the trapdoor 310 is sprung so that it is biased to close by the force of the spring as well as by gravity.

At the end of the passage 304 leading to the kill mechanism 350, positioned adjacent to and between the kill mechanism 350 and trapdoor 310, is a shroud 330. The shroud 330 forms a roughly cone-shaped space in which the head of a rodent can fit. Bait (not shown) is placed in the space formed by the shroud 330.

The kill mechanism 350 comprises a compressed-air powered bolt 351 powered by a compressed air canister 352. In a preferred embodiment, the compressed air is provided to the compressed air canister 352 using a manual air pump, during setup and placement of the trap by an operator. The bolt 351 has on its end an impactor 353, which is a metal head part arranged to strike and push a rodent.

The kill mechanism 350 is triggered by a rotating paddle 354, a first end of which is within the space formed by the shroud 330, so that when a rodent places its head into the shroud 300, the first end of the paddle 354 is lifted. This causes the opposite end of the paddle 354 to rotate, triggering the kill mechanism 350.

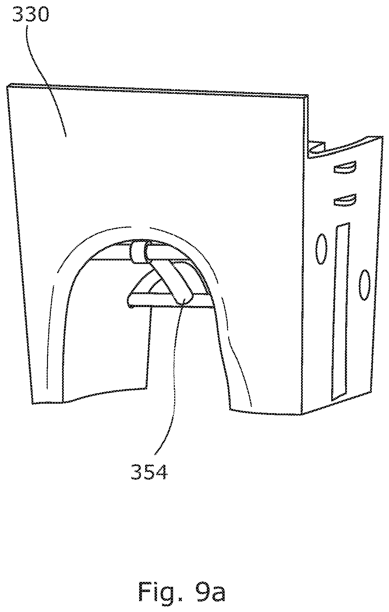

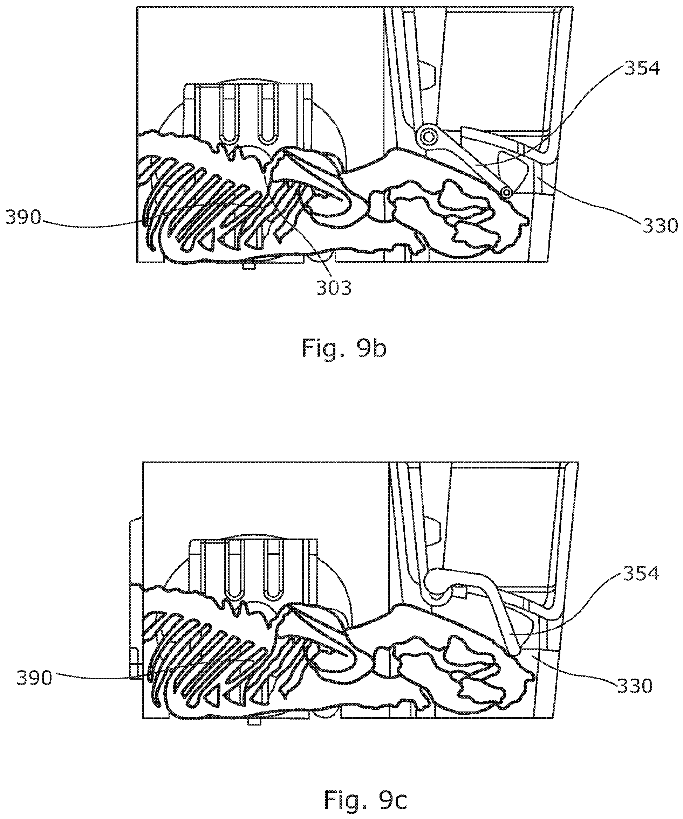

A shroud 330 in accordance with an embodiment of the invention is now described with reference to Figures 9a to 9c. As can be seen, the shroud 330 differs to that shown in the earlier figures, as the space it forms in which the head of the rodent fits is arch-shaped rather than cone-shaped. The paddle 354 is mounted at the top of the shroud 330, with an inverse-T-shaped bar projecting into the space formed by the shroud. As can be seen in Figures 9b and 9c, when a rodent 390 places its head into the space formed by the shroud 330, the top of its nose pushes against the inverse-T-shaped bar of the paddle 354, rotating it and triggering the kill mechanism 350. Figures 9b and 9c show different shapes of inverse-T-shaped bar, which can be used for different types of rodent. In different embodiments of the invention, the paddle 354 can be configured and dimensioned so that different types of rodent trigger the kill mechanism 350. For example, the paddle 354 can be positioned at a height in the shroud 330 so that a rat will trigger the kill mechanism 350, but a mouse will not, due to its smaller size.

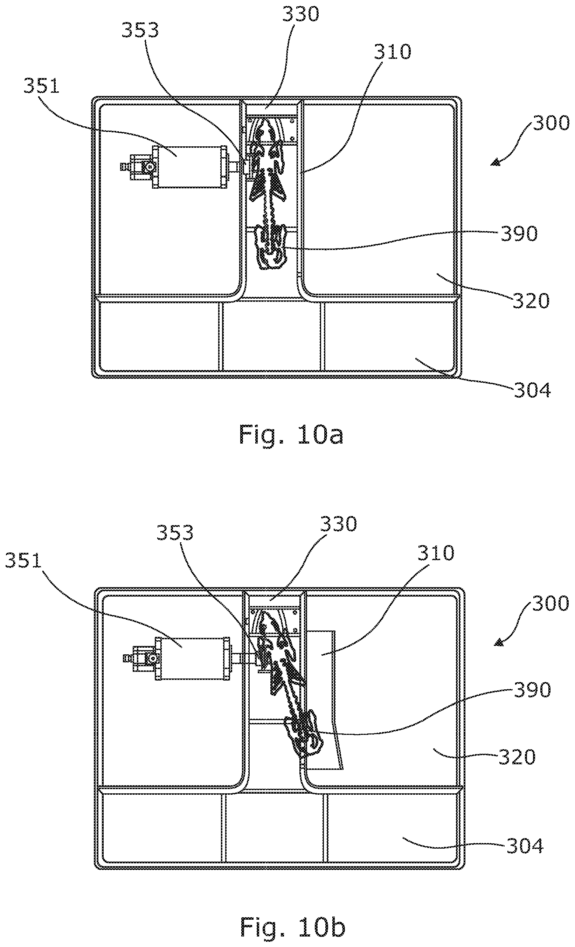

The operation of the rodent trap 300 is now described with reference to Figures 10a to 10d. In Figure 10a, a rodent 390 has been attracted by the bait in the shroud 330. In Figure 10b, the rodent 390 placing its head into the shroud 330 has rotated the paddle 354 sufficiently to trigger the kill mechanism 350.

The triggering of the kill mechanism 350 causes the bolt 351 to move the impactor 353 with great speed and force towards the rodent 350, striking it in its shoulder region. This instantaneously kills the rodent 390, in particular due to the force on the shoulder region of the rodent 390 while the head of the rodent 390 is kept in place within the shroud 330.

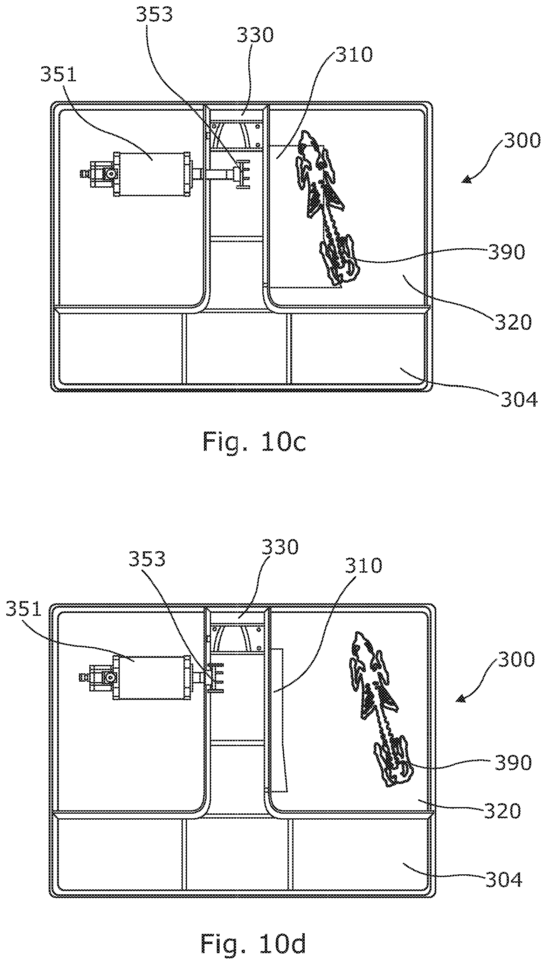

As well as killing the rodent 390, the impactor 353 pushes the rodent towards the trapdoor 310. As the trapdoor is held in place only by springs and magnets, the trapdoor 310 is pushed open by the body of the rodent 390. As can be seen in Figure 10c, the momentum imparted to the rodent 390 by the impactor 353 causes it to travel fully into the storage area 320. The slope of the fork of the passage 304 to the kill mechanism 350, from its side adjacent to the kill mechanism 350 down to its side adjacent to the trapdoor 310, also helps the rodent 390 travel fully into the storage area 320 by virtue of gravity acting on the rodent 390.

Once the rodent has passed fully into the storage area 320 the trapdoor 310 is free to close again, as shown in Figure 10d. The seal of the trapdoor 310, and the magnets in its periphery and corresponding frame, ensure the trapdoor 310 remains tightly closed, so mitigating the escape of any odours from decomposition of rodent corpses in the storage area 320 or the like. In addition, the bolt 351 and impactor 353 return to their original positions, so that further rodents can be killed and stored in the storage area 320 in a similar fashion.

As discussed above, in the rodent trap 300 a rodent is killed by the impactor 353 striking it in its shoulder region, while its head is kept in place within the shroud 330. This "neck shear" method results in a neck break and/or other internal injuries that kill the rodent.

In alternative embodiments, which do not form part of the present invention, a rodent can be killed by the impactor 353 crushing it against a permanently or temporarily unmovable surface, before being moved to the storage area 320. The unmovable surface may be the trapdoor 310 that is temporarily kept in position, for example. This "crushing" may be done instead or as well as the "neck shear" method described above.

In further alternative embodiments, which do not form part of the present invention, a rodent can be killed by impactor 353 apply an extreme acceleration to a rodent. This causes the brain of the rodent to be compressed against the side of its skull due to inertia, killing the rodent. Similarly,

This "acceleration kill" may be done instead or as well as the "neck shear" method described above.

It will be appreciated that other methods of killing a rodent could be used in other embodiments, with or without the use of an impactor. However, these alternative methods do not fall under the present invention.

In embodiments of the invention the storage area (or bag therein) comprises a fragrance. In alternative embodiments the storage area alternative or additionally comprises a liquid absorbent, such as a gelling agent, bentonite clay (commonly used as cat litter), silica gel, fumed silica, or any other suitable liquid absorbent. The fragrance and/or liquid absorbent can help prevent unpleasant odours and liquids associated with decomposition.

In particularly advantageous embodiments of the invention, the storage area (or bag therein) comprises a biocide, such as chlorhexidine, quaternary ammonium cations, or any other suitable biocide. The biocide mitigates the undesirable effect of any decomposition processes occurring in and on the rodent carcass.

In particularly advantageous embodiments of the invention, the storage area comprises a dispenser, to dispense a substance into the storage area. The dispensed substance may be preservative, fragrance, biocide, or any other substance advantageously dispensed into the storage area, as described above. Particularly advantageously, the dispensing mechanism is triggered by the kill mechanism being triggered, or by the trapdoor opening and/or closing, so that the substance is only dispensed when required due to rodent being killed and passing into the storage area, preserving the supply of the substance.

## Claims

1. A rodent trap (300) comprising:
a trigger (354) arranged to be triggered by a rodent;
a kill mechanism (350) arranged to kill a rodent in response to the trigger (354) being triggered by the rodent, wherein the kill mechanism (350) comprises an impactor (353) to strike the rodent to kill it;
a trapdoor (310) positioned to a side of the kill mechanism (350), having a closed position and an open position;
a storage area (320) positioned on the other side of the trapdoor (310) to the kill mechanism (350);
wherein the rodent trap (300) is arranged such that when a rodent is killed by the kill mechanism (350), the rodent corpse passes through the trapdoor (310) into the storage area (320);
**characterised in that** the kill mechanism (350) comprises a shroud (330), and is arranged to kill the rodent when the head of the rodent is within the space formed by the shroud (330), the shroud (330) being configured and dimensioned such that the head of the rodent is maintained in position and orientation within the shroud (330) while the rodent is killed by the impactor (353) striking it in its shoulder region such that the rodent is killed by neck shear, and wherein the kill mechanism (350) is further arranged to push the rodent corpse through the trapdoor (310) into the storage area (320) using the impactor (353).

2. A rodent trap (300) as claimed in claim 1, wherein the trapdoor (310) comprises a latch mechanism arranged to keep the trapdoor (310) closed before a rodent has been killed by the kill mechanism (350), and to release the trapdoor (310) after a rodent has been killed by the kill mechanism (350).

3. A rodent trap (300) as claimed in any preceding claim, further comprising a reset mechanism arranged to reset the kill mechanism (350) after a rodent has been killed by the kill mechanism (350).

4. A rodent trap (300) as claimed in any preceding claim, wherein the kill mechanism (350) comprises a compressed-air powered bolt (351).

5. A rodent trap (300) as claimed in any preceding claim, wherein the storage area (320) comprises a removable bag into which the rodent corpse passes.

6. A rodent trap (300) as claimed in any preceding claim, wherein the storage area (320) comprises a dispensing mechanism arranged to dispense a substance into the storage area (320).

7. A rodent trap (300) as claimed in claim 6, wherein the dispensing mechanism is arranged to dispense the substance when the kill mechanism (350) is activated.

## Patentansprüche

1. Nagetierfalle (300), aufweisend:
einen Auslöser (354), der zum Auslösen durch ein Nagetier ausgebildet ist;
einen Tötungsmechanismus (350), der zum Töten eines Nagetiers in Reaktion auf das Auslösen des Auslösers (354) durch das Nagetier ausgebildet ist, wobei der Tötungsmechanismus (350) einen Schlagbolzen (353) aufweist zum Auftreffen auf das Nagetier, um dieses zu töten;
eine Klapptür (310), die auf einer Seite von dem Tötungsmechanismus (350) angeordnet ist und eine geschlossene Position und eine offene Position aufweist;
einen Aufnahmebereich (320), der auf der anderen Seite von der Klapptür (310) gegenüber dem Tötungsmechanismus (350) angeordnet ist;
wobei die Nagetierfalle (300) derart ausgebildet ist, dass bei Tötung eines Nagetiers durch den Tötungsmechanismus (350) der Kadaver des Nagetiers durch die Klapptür (310) in den Aufnahmebereich (320) gelangt,
**dadurch gekennzeichnet, dass** der Tötungsmechanismus (350) eine Hülle (330) aufweist und dazu ausgebildet ist, das Nagetier zu töten, wenn sich der Kopf des Nagetiers im Inneren des durch die Hülle (330) gebildeten Raums befindet, wobei die Hülle (330) derart ausgebildet und dimensioniert ist, dass der Kopf des Nagetiers im Inneren der Hülle (330) in seiner Position und Ausrichtung gehalten bleibt, während das Nagetier durch den Schlagbolzen (353) getötet wird, der auf dessen Schulterbereich auftrifft, so dass das Nagetier durch Genickscherung getötet wird, und wobei der Tötungsmechanismus (350) ferner dazu ausgebildet ist, den Nagetierkadaver unter Verwendung des Schlagbolzens (353) durch die Klapptür (310) in den Aufnahmebereich (320) zu schieben.

2. Nagetierfalle (300) nach Anspruch 1,
wobei die Klapptür (310) einen Verriegelungsmechanismus aufweist, der dazu ausgebildet ist, die Klapptür (310) geschlossen zu halten, bevor ein Nagetier durch den Tötungsmechanismus (350) getötet worden ist, und die Klapptür (310) freizugeben, nachdem ein Nagetier durch den Tötungsmechanismus (350) getötet worden ist.

3. Nagetierfalle (300) nach einem der vorhergehenden Ansprüche,
die ferner einen Rücksetzmechanismus aufweist, der dazu ausgebildet ist, den Tötungsmechanismus (350) zurückzusetzen, nachdem ein Nagetier durch den Tötungsmechanismus (350) getötet worden ist.

4. Nagetierfalle (300) nach einem der vorhergehenden Ansprüche,
wobei der Tötungsmechanismus (350) einen mit Druckluft betriebenen Bolzen (351) aufweist.

5. Nagetierfalle (300) nach einem der vorhergehenden Ansprüche,
wobei der Aufnahmebereich (320) einen herausnehmbaren Beutel aufweist, in den der Nagetierkadaver gelangt.

6. Nagetierfalle (300) nach einem der vorhergehenden Ansprüche,
wobei der Aufnahmebereich (320) einen Abgabemechanismus aufweist, der zum Abgeben einer Substanz in den Aufnahmebereich (320) ausgebildet ist.

7. Nagetierfalle (300) nach Anspruch 6,
wobei der Abgabemechanismus dazu ausgebildet ist, die Substanz abzugeben, wenn der Tötungsmechanismus (350) aktiviert wird.

## Revendications

1. Piège à rongeurs (300), comprenant :
un déclencheur (354) agencé pour être déclenché par un rongeur ;
un mécanisme d'abattage (350) agencé pour tuer un rongeur en réponse au déclencheur (354) déclenché par le rongeur, dans lequel le mécanisme d'abattage (350) comprend un impacteur (353) prévu pour frapper le rongeur afin de le tuer ;
une trappe (310) positionnée sur un côté du mécanisme d'abattage (350), présentant une position fermée et une position ouverte ;
une zone de stockage (320) positionnée de l'autre côté de la trappe (310) par rapport au mécanisme d'abattage (350) ;
dans lequel le piège à rongeurs (300) est agencé de telle sorte que lorsqu'un rongeur est tué par le mécanisme d'abattage (350), le cadavre du rongeur passe à travers la trappe (310) jusque dans la zone de stockage (320) ;
**caractérisé en ce que** le mécanisme d'abattage (350) comprend une enveloppe (330), et est agencé pour tuer le rongeur lorsque la tête du rongeur est à l'intérieur de l'espace formé par l'enveloppe (330), l'enveloppe (330) étant configurée et dimensionnée de telle sorte que la tête du rongeur soit maintenue en position et en orientation à l'intérieur de l'enveloppe (330) tandis que le rongeur est tué par le dispositif d'impact (353) le frappant dans sa région d'épaule de telle sorte que le rongeur soit tué par cisaillement au niveau du cou, et dans lequel le mécanisme d'abattage (350) est en outre agencé pour pousser le cadavre de rongeur à travers la trappe (310) jusque dans la zone de stockage (320) en utilisant le dispositif d'impact (353).

2. Piège à rongeurs (300) selon la revendication 1, dans lequel la trappe (310) comprend un mécanisme de verrouillage agencé pour maintenir la trappe (310) fermée avant qu'un rongeur ait été tué par le mécanisme d'abattage (350), et pour libérer la trappe (310) après qu'un rongeur ait été tué par le mécanisme d'abattage (350).

3. Piège à rongeurs (300) selon l'une quelconque des revendications précédentes, comprenant en outre un mécanisme de réinitialisation agencé pour réinitialiser le mécanisme d'abattage (350) après qu'un rongeur ait été tué par le mécanisme d'abattage (350).

4. Piège à rongeurs (300) selon l'une quelconque des revendications précédentes, dans lequel le mécanisme d'abattage (350) comprend un boulon alimenté par air comprimé (351).

5. Piège à rongeurs (300) selon l'une quelconque des revendications précédentes, dans lequel la zone de stockage (320) comprend une poche amovible dans laquelle passe le cadavre de rongeur.

6. Piège à rongeurs (300) selon l'une quelconque des revendications précédentes, dans lequel la zone de stockage (320) comprend un mécanisme de distribution agencé pour distribuer une substance dans la zone de stockage (320).

7. Piège à rongeurs (300) selon la revendication 6, dans lequel le mécanisme de distribution est agencé pour distribuer la substance lorsque le mécanisme d'abattage (350) est activé.
